# EUROPEAN PATENT APPLICATION

(11) **EP 2 991 000 A1**
(43) Date of publication of application: **02.03.2016**
(21) Application number: 13882914.8
(22) Date of filing: 25.04.2013
(51) Int. Cl.: G06K 17/00, G06F 3/041, H04B 10/11

(54) **DATA COMMUNICATION DEVICE AND PROGRAM**

(71) Applicant: Hara, Yoichiro, Narashino-shi, Chiba 275-0016 (JP)
(72) Inventor: OGATA, Masayasu, Kodaira-shi Tokyo 187-0022 (JP)
(74) Representative: Hoffmann Eitle
(86) International application number: PCT/JP2013/062236
(87) International publication number: WO 2014/174636

(57) **Abstract**

The present invention is to enable data communication between a portable terminal and a data communication device (reader terminal) using a simple method without using an IC chip for contactless communication. The data communication device includes: a memory, multiple photodetectors for detecting light in multiple regions on a touch screen of the portable terminal; a data generation unit for generating reception data based on the output of the multiple photodetectors and storing the reception data in the memory; an input device for performing touch input on the touch screen according to a control signal; and a control signal generation unit for generating the control signal for the input device.

## Description

### Technical Field

The present invention relates to a data communication device and a program.

### Background Art

With the popularization of payment services using contactless communication, an IC (Integrated Circuit) chip for performing contactless communication has been often incorporated even in a portable terminal such as a smartphone (e.g., Patent Document 1).

### Citation List

### Patent Document

Patent Document 1: JP 2009-187219 A

### Disclosure of the Invention

### Problem to be Solved by the Invention

However, the IC chip for contactless communication is not incorporated in all portable terminals, and some users are in a situation where the payment services using contactless communication remain unavailable to the users. Further, since there are various types of contactless communication, the payment services using contactless communication may be unavailable to even a portable terminal in which the IC chip for contactless communication is incorporated.

Therefore, it is an object of the present invention to enable data communication between a portable terminal and a data communication device (reader terminal) using a simple method without using the IC chip for contactless communication.

### Means for Solving the Problem

A data communication device according to one aspect of the present invention includes: a memory; multiple photodetectors for detecting light in multiple regions on a touch screen of a portable terminal; a data generation unit for generating reception data based on the output of the multiple photodetectors and storing the reception data in the memory; an input device for performing touch input on the touch screen according to a control signal; and a control signal generation unit for generating the control signal for the input device.

A program according to one aspect of the present invention causes a portable terminal having a touch screen to implement: an image display unit for displaying an image of a pattern corresponding to transmission data in multiple regions on the touch screen; and a data receiving unit for generating reception data based on touch input from a data communication device including multiple photodetectors for detecting light in the multiple regions, and an input device for performing touch input on the touch screen.

In the present invention, the term "unit" does not merely mean physical means, which includes a case where the function of the "unit" is implemented by software. Further, the function of one "unit" or device may be implemented by two or more physical means or devices, or the functions of two or more "units" or devices may be implemented by one physical means or device.

### Effect of the Invention

According to the present invention, data communication can be performed between a portable terminal and a data communication device (reader terminal) using a simple method without using an IC chip for contactless communication.

### Brief Description of the Drawings

FIG. 1 is a diagram illustrating the configuration of a data communication system composed of a smartphone and a reader terminal as one embodiment of the present invention.
FIG. 2 is a view as seen from the side of a portable terminal and the reader terminal when data communication is performed between the portable terminal and the reader terminal.
FIG. 3 is a view as seen from the back side of the portable terminal in a manner to make the portable terminal transparent when data communication is performed between the portable terminal and the reader terminal.
FIG. 4 is a block diagram illustrating one example of the hardware configuration of the portable terminal.
FIG. 5 is a block diagram illustrating one example of functions implemented on the portable terminal.
FIG. 6 is a view illustrating one example of a state where the portable terminal is placed at a slant to the reader terminal.
FIG. 7 is a view illustrating one example of a state where the positions of image regions match the positions of phototransistors corresponding to the image regions.
FIG. 8 is a block diagram illustrating one example of the hardware configuration of the reader terminal.
FIG. 9 is a diagram illustrating one example of the structure of a switch mechanism.
FIG. 10 is a block diagram illustrating one example of functions implemented on a microcomputer of the reader terminal.
FIG. 11 is a flowchart illustrating one example of communication processing when data are transmitted from the portable terminal to the reader terminal.
FIG. 12 is a flowchart illustrating one example of communication processing when the portable terminal receives data from the reader terminal.
FIG. 13 is a diagram illustrating one example of a POS system using data communication between the portable terminal and the reader terminal.
FIG. 14 is a diagram illustrating one example when the reader terminal is used as a storage medium.
FIG. 15 is a diagram illustrating one example when the reader terminal is used for user authentication.

### Mode for Carrying out the Invention

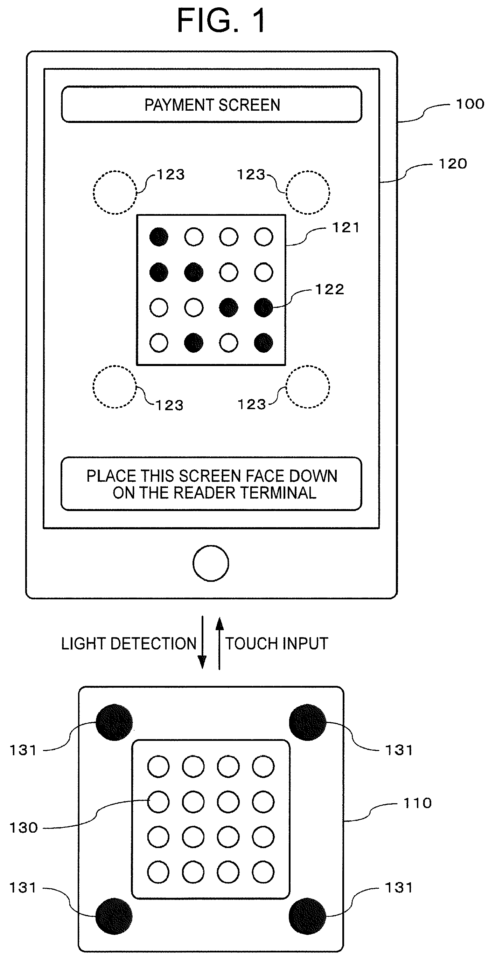

One embodiment of the present invention will be described below with reference to the accompanying drawings. FIG. 1 is a diagram illustrating the configuration of a data communication system composed of a smartphone and a reader terminal as one embodiment of the present invention. As illustrated in FIG. 1, the data communication system is configured to include a portable terminal 100 and a reader terminal 110.

The portable terminal 100 is a portable computer including a touch screen 120 such as a smartphone or a tablet terminal. The touch screen 120 is an input/display device capable of detecting touch input with a finger or the like, and displaying an image. In the embodiment, it is assumed that the touch screen 120 includes a capacitive touch panel as the input device. The touch screen 120 can detect a touched position with a change in capacitance due to a finger or the like that touched on the screen surface. The touch screen 120 also includes a liquid crystal panel or an organic EL (electroluminescence) panel as a display device.

The portable terminal 100 can display, on the touch screen 120, an image (transmission data image) 121 according to transmission data to the reader terminal 110. As illustrated in FIG. 1, multiple image regions 122 are provided in the transmission data image 121. In FIG. 1, each image region 122 is indicated by a white circle or black circle. The white circle indicates a region in which an image of a color higher in luminance than a predetermined level (e.g., "white" in the embodiment) is displayed, and the black circle indicates a region in which an image of a color lower in luminance than the predetermined level (e.g., "black" in the embodiment) is displayed. The multiple image regions 122 are arranged by a predetermined rule. In the example illustrated in FIG. 1, the multiple image regions 122 are arranged at predetermined intervals in a 4×4 lattice shape. Note that the positions of the multiple image regions 122 correspond to the positions of multiple phototransistors 130 to be described later.

When performing data communication with the reader terminal 110, the portable terminal 100 can detect touch input to an input region 123 on the touch screen 120. In the example illustrated in FIG. 1, multiple input regions 123 are provided. Note that the positions of the multiple input regions 123 correspond to the positions of multiple input devices 131 to be described later.

The reader terminal 110 is a data communication device for exchanging data with the portable terminal 100, and includes the multiple phototransistors 130 and the multiple input devices 131.

The phototransistors 130 are photodetectors for detecting light in the multiple image regions 122 displayed on the touch screen 120 of the portable terminal 100. The multiple phototransistors 130 are arranged by a predetermined rule. In the example illustrated in FIG. 1, the multiple phototransistors 130 are arranged at predetermined intervals in a 4x4 lattice shape. Note that the positions of the multiple phototransistors 130 correspond to the positions of the multiple image regions 122 on the touch screen 120 of the portable terminal 100.

The input devices 131 are devices for performing touch input on the touch screen 120 of the portable terminal 100. The positions of the multiple input devices 131 correspond to the multiple input regions 123 on the touch screen 120 of the portable terminal 100. The specific structure of each of the input devices 131 will be described later.

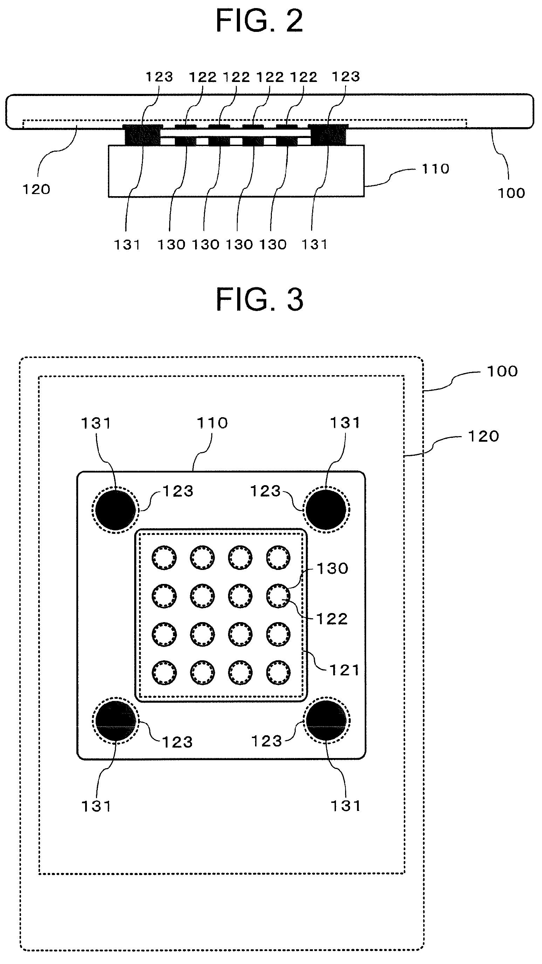

FIG. 2 and FIG. 3 are views illustrating a state of data communication between the portable terminal 100 and the reader terminal 110. FIG. 2 is a view as seen from the side of the portable terminal 100 and the reader terminal 110, and FIG. 3 is a view as seen from the back side of the portable terminal 100 in a manner to make the portable terminal 100 transparent.

As illustrated in FIG. 2 and FIG. 3, the portable terminal 100 is placed on the reader terminal 110 in a manner that the multiple image regions 122 of the touch screen 120 face the multiple phototransistors 130 of the reader terminal 110. In this state, the multiple input regions 123 of the touch screen 120 are located in positions corresponding to the multiple input devices 131 of the reader terminal 110. Note that the faces of the multiple input devices 131, which come into contact with the touch screen 120, are made of a conductive material such as a conductive sponge to be described later. The conductive sponges of the multiple input devices 131 are formed at the same level so that the portable terminal 100 can be horizontally supported on the reader terminal 110.

When data is transmitted from the portable terminal 100 to the reader terminal 110 in such a state that the portable terminal 100 is placed on the reader terminal 110, the transmission data image 121 in which each region 122 is displayed in white or black on the touch screen 120 of the portable terminal 100 in a pattern according to the transmission data. Light of each image region 122 in this transmission data image 121 is detected by a corresponding phototransistor 130. The reader terminal 110 can generate reception data based on the detection results of the multiple phototransistors 130. Thus, data can be transmitted from the portable terminal 100 to the reader terminal 110.

Further, when data is transmitted from the reader terminal 110 to the portable terminal 100, the reader terminal 110 performs touch input through a corresponding one of the input devices 131 in a pattern according to the transmission data. In the portable terminal 100, this touch input is detected in a corresponding input region of the touch screen 120. The portable terminal 100 can generate reception data based on the detection results in the multiple input regions 120. Thus, data can be transmitted from the reader terminal 110 to the portable terminal 100.

Thus, in the data communication system of the embodiment, data communication can be performed easily between the portable terminal 100 and the reader terminal 110 based on the detection of light in the image displayed on the touch screen and touch input on the touch screen without using an IC chip for contactless communication.

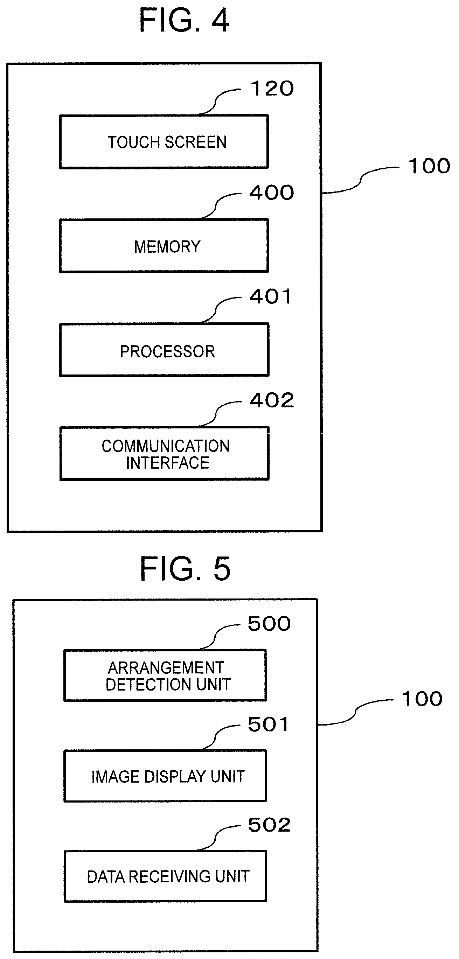

FIG. 4 is a block diagram illustrating one example of the hardware configuration of the portable terminal 100. As illustrated in FIG. 4, the portable terminal 100 includes a memory 400, a processor 401, and a communication interface 402 in addition to the touch screen 120. The memory 400 is a storage area for storing various data and a program. The processor 401 executes the program stored in the memory 400 so that a variety of functions on the portable terminal 100 can be realized. The communication interface 402 is to communicate with another device. For example, as the communication interface 402, there are a mobile phone communication interface for wireless communication between a mobile phone and a base station, and a wireless LAN communication interface for performing wireless communication using a wireless LAN (Local Area Network).

FIG. 5 is a block diagram illustrating one example of functions implemented on the portable terminal 100. As illustrated in FIG. 5, the portable terminal 100 includes an arrangement detection unit 500, an image display unit 501, and a data receiving unit 502. For example, each of these units is implemented by the processor 401 executing the program stored in the memory 400.

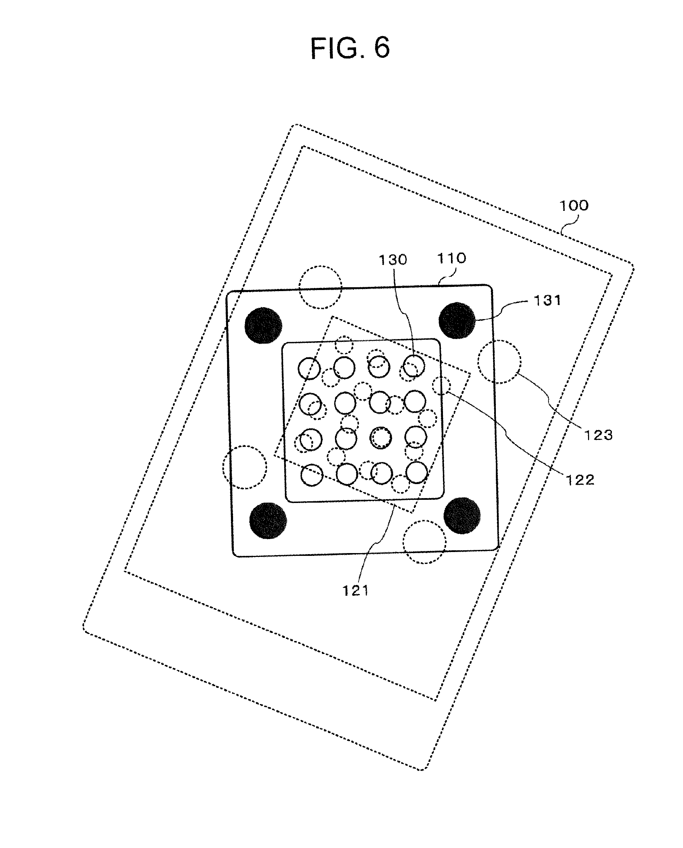

In the state where the portable terminal 100 is placed on the reader terminal 110, the arrangement detection unit 500 can detect the arrangement of the multiple phototransistors 130 of the reader terminal 110. The arrangement of the phototransistors 130 is detected to improve the accuracy of data communication between the portable terminal 100 and the reader terminal 110. For example, as illustrated in FIG. 6, when the portable terminal 100 is placed at a slant to the reader terminal 110, the position of an image region 122 is deviated from the position of a phototransistor 130 corresponding to the image region 122.

Therefore, for example, the arrangement detection unit 500 detects the arrangement of the multiple phototransistors 130 based on predetermined touch input from the input devices 131 of the reader terminal 110. Specifically, for example, if touch input from the upper left, lower left, and lower right input devices 131 in FIG. 6 is performed as the predetermined touch input, the arrangement detection unit 500 can detect these pieces of touch input to detect the arrangement of the multiple phototransistors 130 having a predetermined positional relationship with these input devices 131. Note that the predetermined touch input may be any pattern as long as it can detect the arrangement of the multiple phototransistors 130.

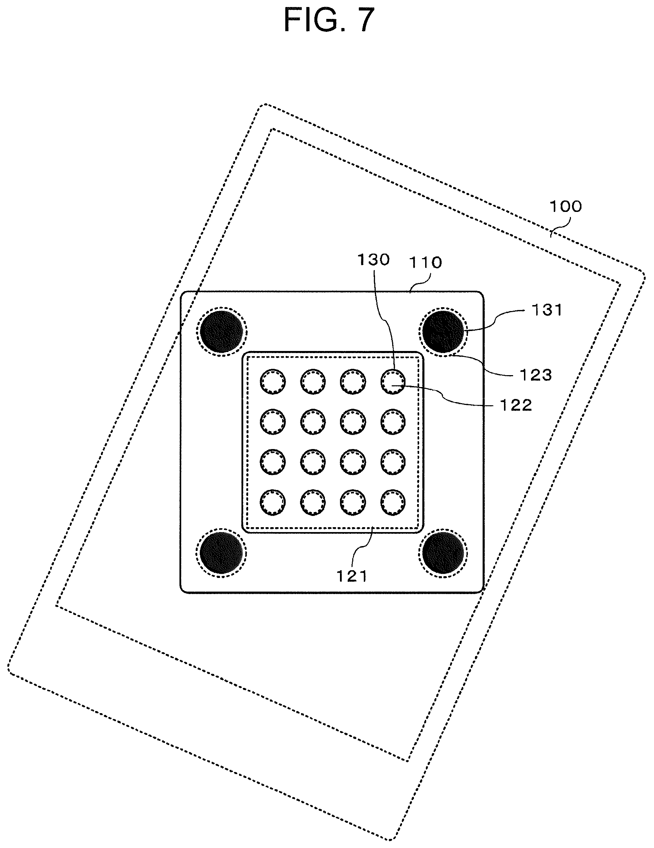

Based on the detection results of the arrangement detection unit 500, the image display unit 501 displays a transmission data image 121 corresponding to the transmission data stored in the memory 400 in a position corresponding to the arrangement of the phototransistors 130 of the reader terminal 110. For example, as illustrated in FIG. 6, when the portable terminal 100 is placed at a slant to the reader terminal 110, the image display unit 501 can display the transmission data image 121 based on the detection results of the arrangement detection unit 500 so that the positions of the image regions 122 will match the positions of the phototransistors 130 corresponding to the image regions 122 as illustrated in FIG. 7.

When 16 image regions 122 are included in the transmission data image 121, one transmission data image 121 can transmit 16-bit data from the portable terminal 100 to the reader terminal 110. For example, the image display unit 501 can display a white image in an image region 122 corresponding to a bit value of "1" and a black image in an image region 122 corresponding to a bit value of "0." When the size of transmission data is more than 16 bits, the image display unit 501 can switch and display multiple transmission data images 121 sequentially. The multiple transmission data images 121 may be switched, for example, at predetermined intervals or in response to receiving, from the reader terminal 110, a notice of completion of data reception corresponding to each transmission data image 121.

Returning to FIG. 5, the data receiving unit 502 generates reception data based on touch input from the input devices 131 of the reader terminal 110, and stores the reception data in the memory 400. When four input devices 131 are provided on the reader terminal 110, the data receiving unit 502 can receive 4-bit data from the reader terminal 110 by one reception. When the size of the reception data from the reader terminal 110 is more than 4 bits, the data receiving unit 502 can receive data multiple times from the reader terminal 110. Data may be switched each time, for example, at a predetermined interval or by the data receiving unit 502 transmitting, to the reader terminal 110, a notice of completion of data reception each time.

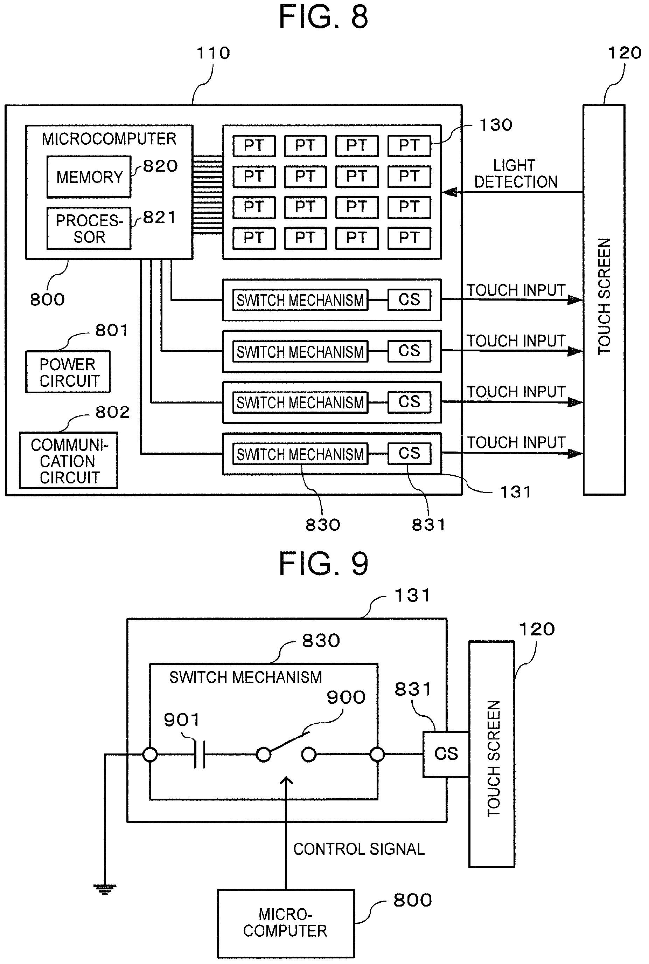

FIG. 8 is a block diagram illustrating one example of the hardware configuration of the reader terminal 110. As illustrated in FIG. 8, the reader terminal 110 includes a microcomputer 800, a power circuit 801, and a communication circuit 802 in addition to the multiple phototransistors (PTs) 130 and the multiple input devices 131.

Based on the detection results at the phototransistors 130, the microprocessor 800 can generate reception data from the portable terminal 100 and control the input devices 131 to transmit data to the portable terminal 100. As illustrated in FIG. 8, the microcomputer 800 includes a memory 820 and a processor 821. The memory 820 is a storage area for storing various data and a program. The processor 821 can execute the program stored in the memory 820 to implement various functions on the microcomputer 800.

The power circuit 801 is a circuit for supplying, to each unit of the reader terminal 110, power-supply voltage necessary for the operation. For example, the power circuit 801 may generate power-supply voltage from a commercial power source. In this case, the power circuit 801 can include an AC-DC converter. Further, for example, the power circuit 801 may generate power-supply voltage from a power source supplied from an external device through an interface such as the USB (Universal Serial Bus) or the like. The power circuit 801 may also generate power-supply voltage using a battery.

The communication circuit 802 is a circuit for the microcomputer 800 to communicate with an external device. For example, the communication circuit 802 can include an interface circuit for performing communication with the external device based on a communication standard such as the USB.

Each of the input devices 131 includes a switch mechanism 830 and a conductive sponge 831. The switch mechanism 830 operates in response to a control signal from the microcomputer 800 to switch on/off (conductive state) of touch input of the conductive sponge 831 on the touch screen 120.

FIG. 9 is a diagram illustrating one example of the structure of the switch mechanism 830. As illustrated in FIG. 9, for example, the switch mechanism 830 can include a relay switch 900 and a capacitor 901. One end of the relay switch 900 is connected to the conductive sponge 831, and the other end thereof is grounded through the capacitor 901. The relay switch 900 is turned on when the control signal from the microcomputer 800 is in one level (e.g., high level), and turned off when the control signal is in the other level (e.g., low level). When the relay switch 900 is turned on in a state where the conductive sponge 831 is in contact with the touch screen 120, the touch screen 120 and the switch mechanism 830 get into a conductive state. This varies the capacitance in a contact portion of the conductive sponge 831, and hence detects touch input to the contact portion.

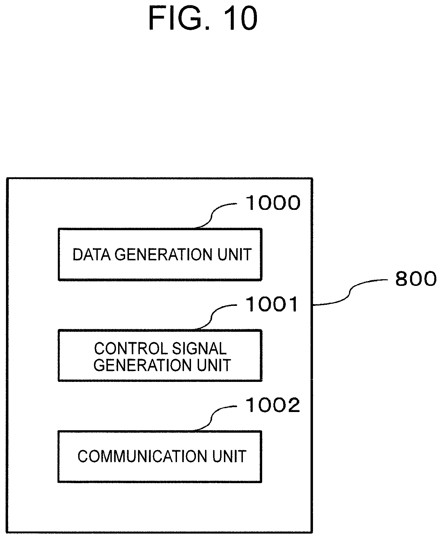

FIG. 10 is a block diagram illustrating one example of functions implemented on the microcomputer 800 of the reader terminal 110. As illustrated in FIG. 10, the microcomputer 800 includes a data generation unit 1000, a control signal generation unit 1001, and a communication unit 1002. For example, each of these units is implemented by the processor 821 executing the program stored in the memory 820.

The data generation unit 1000 generates reception data based on the output of the multiple phototransistors 130, and stores the reception data in the memory 820. When incident light is in one level (e.g., high level) or more, the output of each phototransistor 130 becomes one level (e.g., high level), while when the incident light is in less than a predetermined level, the output of each phototransistor 130 becomes the other level (e.g., low level). In other words, in the embodiment, the output of each phototransistor 130 changes according to the color of the image displayed in an image region 122 located corresponding to the position of each phototransistor 130.

For example, it is assumed on the portable terminal 100 that the white image is displayed in an image region 122 corresponding to the bit value of "1" and the black image is displayed in an image region 122 corresponding to the bit value of "0." It is also assumed on the reader terminal 110 that the output of a phototransistor 130 on which light giving off a white color is incident is in the high level and the output of a phototransistor 130 on which light giving off a black color is incident is in the low level. In this case, the data generation unit 1000 can set, to "1," a bit value corresponding to the phototransistor 130 the output of which is in the high level, and set, to "0," a bit value corresponding to the phototransistor 130 the output of which is in the low level to generate reception data.

When 16 image regions 122 are included in the transmission data image 121 displayed on the touch screen 120 of the portable terminal 100, the data generation unit 1000 can receive 16-bit data as one transmission data image 121 from the portable terminal 100. When the size of the reception data is more than 16 bits, the data generation unit 1000 can generate 16-bit data multiple times based on the light detection results of multiple transmission data images 121 by the phototransistors 130. The detection timing of the output of the phototransistors 130 in the data generation unit 1000 may be, for example, every predetermined interval, or predetermined timing after a notice of completion of data reception is transmitted from the reader terminal 110 to the portable terminal 100.

The control signal generation unit 1001 controls the input devices 131 to generate a control signal for performing touch input on the touch screen 120 of the portable terminal 100. The control signal generation unit 1001 can determine a pattern of touch input by the multiple input devices 131 according to the transmission data to the portable terminal 100. When the number of input devices 131 is four and touch input by respective input devices 131 is all touch input corresponding to a single tap, the control signal generation unit 1001 can perform control once to transmit 4-bit data to the portable terminal 100. Specifically, for example, the control signal generation unit 1001 can generate a control signal to perform a single tap by an input device 131 corresponding to the bit value of "1."

The communication unit 1002 can exchange data with an external device connected through the communication circuit 802. For example, the communication unit 1002 can transmit, to the external device, reception data generated by the data generation unit 1000. Further, for example, the communication unit 1002 can receive, from the external device, transmission data to the portable terminal 100 and store the transmission data in the memory 820. The control signal generation unit 1001 can generate a control signal according to this transmission data to transmit the transmission data to the portable terminal 100.

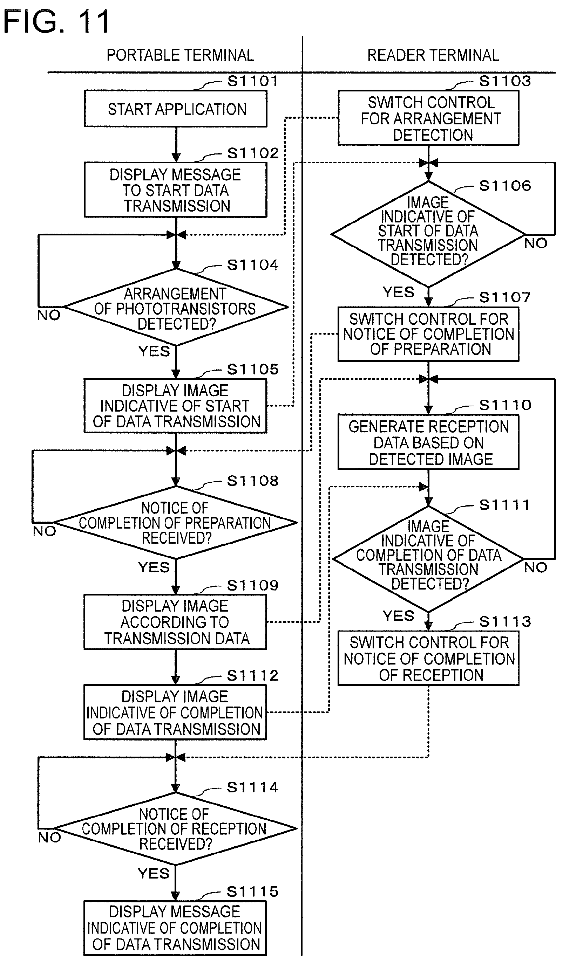

FIG. 11 is a flowchart illustrating one example of communication processing when data are transmitted from the portable terminal 100 to the reader terminal 110. First, a data communication application is started on the portable terminal 100 (S1101). For example, the application can be downloaded via the Internet and stored in the memory 400. Then, the image display unit 501 of the portable terminal 100 displays, on the touch screen 120, a message to start data transmission (S1102). According to this message, the portable terminal 100 is placed on the reader terminal 110 in such a manner that the touch screen 120 will face the phototransistors 130.

The control signal generation unit 1001 of the reader terminal 110 outputs a control signal to cause the input devices 131 to perform touch input in a predetermined pattern in order to cause the portable terminal 110 to detect the arrangement of the phototransistors 130 (S1103). Note that the control of the switch mechanisms 830 by the control signal may be repeated a predetermined number of times.

In the portable terminal 100, the arrangement detection unit 500 detects the arrangement of the phototransistors 130 by touch input from the input devices 131 of the reader terminal 110 (S1104). When the arrangement of the phototransistors 130 is detected (S1104: YES), the image display unit 501 displays, on the touch screen 120, the transmission data image 121 in a predetermined pattern indicative of the start of data transmission so that the detected arrangement of the phototransistors 130 will match the positions of the image regions 122 (S1105).

The data generation unit 1000 of the reader terminal 110 detects an image indicative of the start of data transmission based on the output signals from the phototransistors 130 (S1106). When the image indicative of the start of data transmission is detected (S1106: YES), the control signal generation unit 1001 outputs a control signal to cause the input devices 131 to perform touch input in a predetermined pattern in order to give notice of completion of preparation for data reception to the portable terminal 100 (S1107).

In the portable terminal 100, the data receiving unit 502 receives a notice of completion of preparation from the reader terminal 110 by touch input from the touch input devices 131 of the reader terminal 110 (S1108). When the notice of completion of preparation is received (S1108: YES), the image display unit 501 displays, on the touch screen 120, a transmission data image 121 according to the transmission data stored in the memory 400 (S1109).

The data generation unit 1000 of the reader terminal 110 generates reception data according to the transmission data image 121 based on the output signals from the phototransistors 130, and stores the reception data in the memory 820 (S1110). Note that the data transmission processing (S1109 and S1110) from the portable terminal 100 to the reader terminal 110 can be repeatedly performed according to the amount of transmission data.

Upon completion of data transmission to the reader terminal 110, the image display unit 501 of the portable terminal 100 displays, on the touch screen 120, a predetermined pattern of a transmission data image 121 indicative of the completion of data transmission (S1112).

The data generation unit 1000 of the reader terminal 110 detects the image indicative of the completion of data transmission based on the output signals from the phototransistors 130 (S1111). When the image indicative of the completion of data transmission is detected (S1111: YES), the control signal generation unit 1001 outputs a control signal to cause the input devices 131 to perform touch input in a predetermined pattern in order to give notice of completion of data reception to the portable terminal 100 (S1113).

In the portable terminal 100, the data receiving unit 502 receives the notice of completion of reception from the reader terminal 110 by touch input from the touch input devices 131 of the reader terminal 110 (S1114). When the notice of completion of reception is received (S1114: YES), the image display unit 501 displays, on the touch screen 120, a message indicative of completion of data transmission to the reader terminal 110 (S1115). When data transmission from the portable terminal 100 to the reader terminal 110 is completed, sound to give notice of completion of transmission to the user may be output on the portable terminal 100 or the reader terminal 110.

The above processing can lead to transmitting data from the portable terminal 100 to the reader terminal 110 Note that the flowchart illustrated in FIG. 11 is just one example, and the protocol for transmitting data from the portable terminal 100 to the reader terminal 110 is not limited thereto.

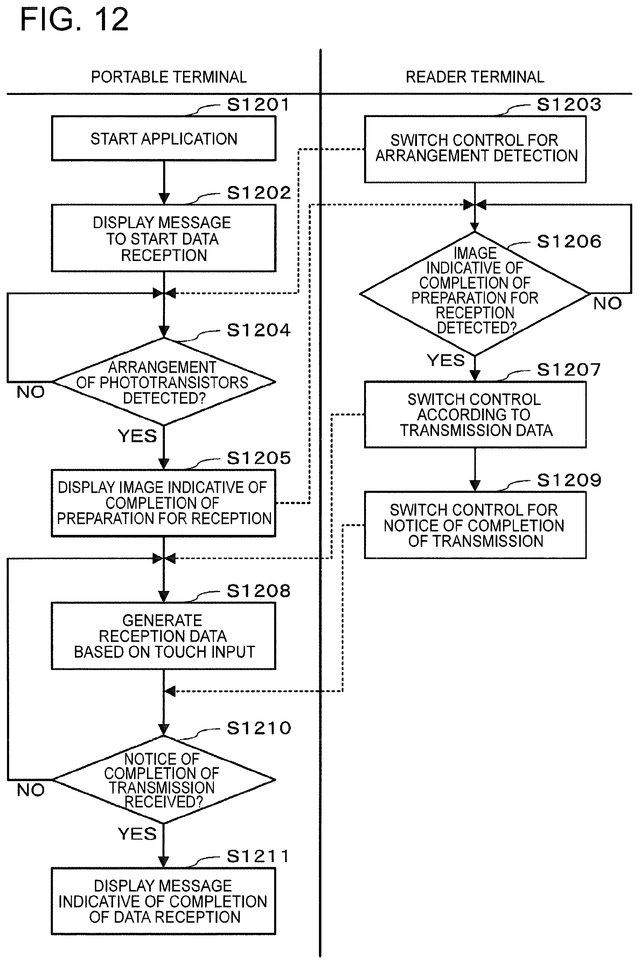

FIG. 12 is a flowchart illustrating one example of communication processing when the portable terminal 100 receives data from the reader terminal 110. First, the data communication application is started on the portable terminal 100 (S1201). Then, the image display unit 501 of the portable terminal 100 displays, on the touch screen 120, a message to start data reception (S1202). According to this message, the portable terminal 100 is placed on the reader terminal 110 so that the touch screen 120 will face the phototransistors 130.

Since the control signal generation unit 1001 of the reader terminal 110 outputs a control signal to cause the input devices 131 to perform touch input in a predetermined pattern in order to cause the portable terminal 110 to detect the arrangement of the phototransistors 130 (S1203). Note that the control of the switch mechanisms 830 by the control signal may be repeated a predetermined number of times.

In the portable terminal 100, the arrangement detection unit 500 detects the arrangement of the phototransistors 130 by touch input from the touch input devices 131 of the reader terminal 110 (S1204). When the arrangement of the phototransistors 130 is detected (S1204: YES), the image display unit 501 displays, on the touch screen 120, the transmission data image 121 in a predetermined pattern indicative of completion of preparation for reception so that the detected arrangement of the phototransistors 130 will match the positions of the image display regions 122 (S1205).

The data generation unit 1000 of the reader terminal 110 detects the image indicative of completion of preparation for reception based on the output signals from the phototransistors 130 (S1206). When the image indicative of completion of preparation for reception is detected (S1206: YES), the control signal generation unit 1001 outputs a control signal to cause the input devices 131 to perform touch input in a pattern corresponding to the transmission data stored in the memory 820 (S1207).

In the portable terminal 100, the data receiving unit 502 generates reception data based on the touch input from the touch input devices 131 of the reader terminal 110, and stores the reception data in the memory 400 (S1208). Note that the data transmission processing (S1207 and S1208) from the reader terminal 110 to the portable terminal 100 can be repeatedly performed according to the amount of transmission data.

Upon completion of data transmission, the control signal generation unit 1001 of the reader terminal 110 outputs a control signal to cause the input devices 131 to perform touch input in a predetermined pattern in order to give notice of completion of data transmission to the portable terminal 100 (S1209).

In the portable terminal 100, the data receiving unit 502 receives the notice of completion of transmission from the reader terminal 110 by touch input from the touch input devices 131 of the reader terminal 110 (S1110). When the notice of completion of transmission is received (S1210: YES), the image display unit 501 displays, on the touch screen 120, a message indicative of the completion of data reception from the reader terminal 110 (S1211). When data transmission from the reader terminal 110 to the portable terminal 100 is completed, sound to give notice of completion of transmission to the user may be output on the portable terminal 100 or the reader terminal 110.

The above processing can lead to transmitting data from the reader terminal 110 to the portable terminal 100. Note that the flowchart illustrated in FIG. 12 is just one example, and the protocol for transmitting data from the reader terminal 110 to the portable terminal 100 is not limited thereto.

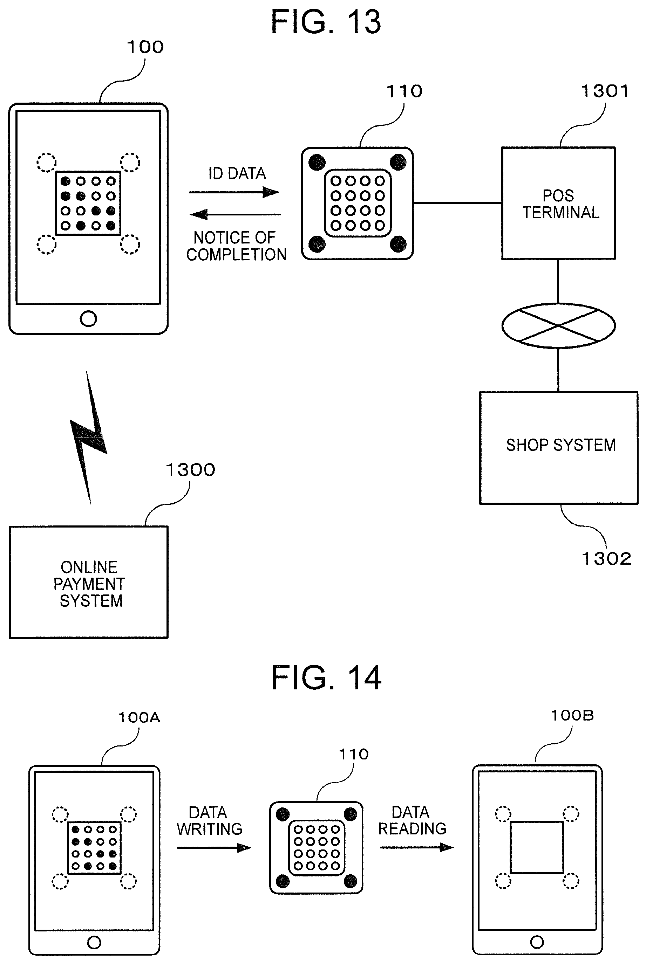

Next, an example of the application of data communication between the portable terminal 100 and the reader terminal 110 will be described. FIG. 13 is a diagram illustrating one example of a POS (Point of Sales) system using data communication between the portable terminal 100 and the reader terminal 110. In the configuration illustrated in FIG. 13, the portable terminal 100 can access an online payment system 1300 on the Internet, for example, through a mobile phone communication network or a wireless LAN network. Then, the portable terminal 100 can perform payment processing with the online payment system 1300 to pay for a commercial product or the like. Thus, transmission data (ID data) indicative of the completion of payment is stored in the memory 400 of the portable terminal 100.

Then, the transmission data (ID data) is transmitted from the portable terminal 100 to the reader terminal 110, for example, according to the protocol illustrated in FIG. 11, and a notice of completion is transmitted from the reader terminal 110 to the portable terminal 100.

The reader terminal 110 is connected to a POS terminal 1301, for example, via the USB to be able to transmit the data (ID data) received on the reader terminal 110 to a shop system 1302 through the network of the POS terminal 1301. Note that the control signal generation unit 1001 of the reader terminal 110 may also generate a control signal to perform touch input on the portable terminal 100 based on an instruction from an external device such as the POS terminal 1301.

FIG. 14 is a diagram illustrating one example when the reader terminal 110 is used as a storage medium. In the configuration illustrated in FIG. 14, a portable terminal 100A can write (transmit) data to the reader terminal 110, for example, according to the protocol illustrated in FIG. 11. The data written to the reader terminal 110 are stored in the memory 820 of the reader terminal 110. After that, a portable terminal 100B can read (receive) data from the reader terminal 110, for example, according to the protocol illustrated in FIG. 12. Thus, data can be exchanged between multiple portable terminals 100 through the reader terminal 110.

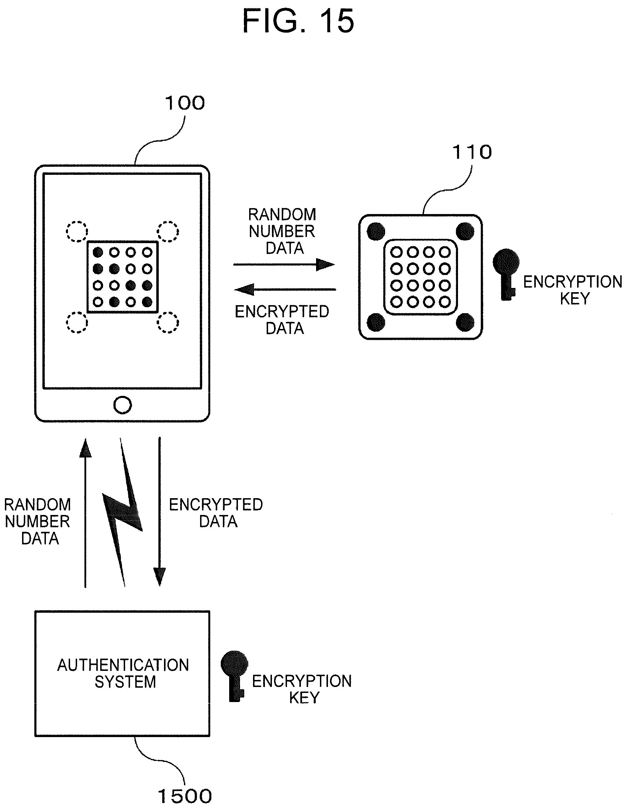

FIG. 15 is a diagram illustrating one example when the reader terminal 110 is used for user authentication. First, an encryption key for user authentication is stored in the memory 820 of the reader terminal 110. In the configuration illustrated in FIG. 15, the portable terminal 100 can access an authentication system 1500 on the Internet, for example, through a mobile phone communication network or a wireless LAN network. For example, the portable terminal 100 receives random number data from the authentication system 1500.

Then, the portable terminal 100 transmits the random number data to the reader terminal 110, for example, according to the protocol illustrated in FIG. 11. The reader terminal 110 generates encrypted data obtained by encrypting the random number data using the encryption key stored in the memory 820, and transmits the encrypted data to the portable terminal 100 as a notice of completion of reception of the random number data.

The portable terminal 100 transmits, to the authentication system 1500, the encrypted data received from the reader terminal 110. The authentication system 1500 can perform user authentication by verifying that the encrypted data received from the portable terminal 100 is obtained by encrypting, using the right encryption key, the random number data transmitted to the portable terminal 100.

As described above, one embodiment of the present invention has been described. According to the data communication system of the embodiment, light in the multiple image regions 122 of the portable terminal 100 is detected by the phototransistors 130 of the reader terminal 110 so that data can be transmitted from the portable terminal 100 to the reader terminal 110. Further, touch input is performed on the touch screen 120 of the portable terminal 100 by the input devices 131 provided on the reader terminal 110 so that data can be transmitted from the reader terminal 110 to the portable terminal 100. In other words, according to the data communication system of the embodiment, bidirectional data communication can be performed between the portable terminal 100 and the reader terminal 110 using a simple method without using an IC chip for contactless communication.

Note that the embodiment is to make it easy to understand the present invention, and should not be interpreted to limit the present invention. The present invention can be modified and improved without departing from the spirit of the invention, and equivalents thereof are included in the present invention.

For example, the input type of the touch screen in the embodiment is the capacitive type, but the input type of the touch screen is not limited thereto. Further, the reader terminal may be configured to be able to switch the input devices depending on the type of touch screen.

Further, for example, the number of image regions displayed on the touch screen is the same as the number of phototransistors provided on the reader terminal in the embodiment, but these numbers do not have to be the same. For example, phototransistors more in number than the number of image regions displayed on the touch screen may be provided on the reader terminal. In this case, for example, a transmission data image displayed on the touch screen of the portable terminal may be displayed in a predetermined position regardless of the arrangement of the phototransistors. Then, a display pattern of the transmission data image may be detected by an external device connected to the portable terminal or the reader terminal based on the output from the phototransistors.

### [Description of Reference Numerals]

- 100: portable terminal
- 110: reader terminal
- 120: touch screen
- 121: transmission data image
- 122: image region
- 123: input region
- 130: phototransistor
- 131: input device
- 400: memory
- 401: processor
- 402: communication interface
- 500: arrangement detection unit
- 501: image display unit
- 502: data receiving unit
- 800: microcomputer
- 801: power circuit
- 802: communication circuit
- 820: memory
- 821: processor
- 830: switch mechanism
- 831: conductive sponge
- 900: relay switch
- 901: capacitor
- 1000: data generation unit
- 1001: control signal generation unit
- 1002: communication unit
- 1300: online payment system
- 1301: POS terminal
- 1302: shop system
- 1500: authentication system

## Claims

1. A data communication device comprising:
a memory;
a plurality of photodetectors for detecting light in a plurality of regions on a touch screen of a portable terminal;
a data generation unit for generating reception data based on output of the plurality of photodetectors and storing the reception data in the memory;
an input device for performing touch input on the touch screen according to a control signal; and
a control signal generation unit for generating the control signal for the input device.

2. The data communication device according to claim 1, wherein
the plurality of photodetectors are arranged at predetermined intervals.

3. The data communication device according to claim 2, wherein
the plurality of photodetectors are arranged in a lattice shape.

4. The data communication device according to claim 2 or 3, wherein
the data generation unit generates the reception data based on a pattern of light detected by the plurality of photodetectors.

5. The data communication device according to any one of claims 1 to 4, wherein
the input device includes a switch mechanism capable of switching a conductive state with the touch screen according to the control signal.

6. The data communication device according to claim 5, wherein
the input device includes a plurality of the switch mechanisms.

7. The data communication device according to any one of claims 1 to 6, wherein
the input device is arranged in a position capable of performing touch input on the touch screen in a state where the plurality of photodetectors can detect light in the plurality of regions on the touch screen.

8. The data communication device according to any one of claims 1 to 7, further comprising
a communication unit for transmitting the reception data to a computer communicably connected.

9. The data communication device according to claim 8, wherein
the communication unit receives transmission data from the computer and stores the transmission data in the memory, and
the control signal generation unit generates the control signal based on the transmission data stored in the memory.

10. The data communication device according to any one of claims 1 to 9, wherein
the control signal generation unit generates the control signal according to the reception data.

11. The data communication device according to any one of claims 1 to 10, wherein
the data generation unit repeatedly detects output of the plurality of photodetectors to generate the reception data.

12. The data communication device according to any one of claims 1 to 11, wherein
the control signal generation unit sequentially generates a plurality of control signals.

13. A program for causing a portable terminal having a touch screen to implement:
an image display unit for displaying an image of a pattern corresponding to transmission data in a plurality of regions on the touch screen; and
a data receiving unit for generating reception data based on touch input from a data communication device including a plurality of photodetectors for detecting light in the plurality of regions, and an input device for performing touch input on the touch screen.

14. The program according to claim 13, further causing the portable terminal to implement
an arrangement detection unit for detecting arrangement of the plurality of photodetectors,
wherein the image display unit displays the image in the plurality of regions located according to the arrangement of the plurality of photodetectors arranged by the arrangement detection unit.

15. The program according to claim 13 or 14, wherein
the image display unit sequentially switches and displays images of a plurality of patterns corresponding to the transmission data.
